## Europäisches Patentamt
## European Patent Office
## Office européen des brevets

(11) Veröffentlichungsnummer: **0 420 204 A2**

## (12) EUROPÄISCHE PATENTANMELDUNG

(21) Anmeldenummer: 90118492.9

(22) Anmeldetag: 26.09.90

(51) Int. Cl.⁵: **H04M 3/42**, H04M 1/57

(30) Priorität: 28.09.89 DE 3932498
15.11.89 DE 3938000

(43) Veröffentlichungstag der Anmeldung:
03.04.91 Patentblatt 91/14

(84) Benannte Vertragsstaaten:
AT BE DE FR GB GR IT

(71) Anmelder: Siemens Aktiengesellschaft
Wittelsbacherplatz 2
W-8000 München 2(DE)

(72) Erfinder: Wille, Klaus, Dipl.-Ing.
Possartstrasse 24
W-8000 München 80(DE)
Erfinder: Kienberger, Helmut, Dipl.-Ing.
Kemptenerstrasse 23
W-8000 München 71(DE)
Erfinder: Marwitz, Erika
Saleggstrasse 23
W-8000 München 90(DE)

(54) **Verfahren zur Übertragung von von Teilnehmerdaten in Kommunikationsanlagen von einem geheimen Teilnehmergerät zu einem anderen.**

(57) In Kommunikationsanlagen findet zwischen Teilnehmergeräten (TLN) eine Übertragung von Teilnehmerdaten statt, um diese auf einem Display eines Teilnehmergerätes (TLN) eines Verbindungspartners anzuzeigen. Die Anzeige der Teilnehmerdaten sogenannter gehei:er Teilnehmergeräte (TLNx) beim Verbindungspartner wird verhindert. Der Geheimstatus solcher Teilnehmergeräte (TLNx) kann generell oder verbindungsbezogen durch eine Identifikationsinformation aufgehoben werden, die durch eine mittels einer Geheimhaltungsaufhebeinformation aktivierte Identifikationsfunktion erzeugt und übertragen wird.

EP 0 420 204 A2

# VERFAHREN ZUR ÜBERTRAGUNG VON TEILNEHMERDATEN IN KOMMUNIKATIONSANLAGEN VON EINEM GEHEIMEN TEILNEHMERGERÄT ZU EINEM ANDEREN

Die Erfindung betrifft ein verfahren zur Übertragung von Teilnehmerdaten nach dem Oberbegriff des Patentanspruchs 1.

Viele Teilnehmergeräte von Kommunikationsanlagen verfügen über ein Display zur Anzeige vermittlungstechnischer Daten. Damit ist es dem Benutzer solcher Geräte unter anderem möglich, bereits vor Entgegennahme eines Gesprächs durch die Anzeige der Teilnehmerdaten des rufenden Teilnehmers zu erfahren, von welchem Teilnehmeranschluß der Anruf stammt. Die Anzeige der Teilnehmerdaten beim Verbindungspartner erfolgt beispielsweise bei Intern- und Externgesprächen, beim Vermittlungsplatzverkehr, bei automatischem Rückruf, bei Anrufübernahme, beim Wechsel des Verbindungsziels (Rufweiterschaltung, Anrufumleitung), bei Verbindung zur Personensucheinrichtung u. s.w.. Aufgrund dieser Anzeige kann der Angerufene - abhängig vom persönlichen Interesse speziell mit diesem Anrufer in Verbindung zu treten - entscheiden, ob er den Anruf entgegennimmt oder nicht.

Diese Tatsache war eine Voraussetzung für die Forderung nach sogenannten geheimen Teilnehmergeräten, die ein Übertragen der anschlußbezogenen Teilnehmerdaten zum gewünschten Gesprächspartner verhindern. Das ISDN-Leistungsmerkmal (Integrated Services Digital Network) "Geheim-Rufnummer" berücksichtigt diese Forderung. In einem Speicher einer Kommunikationsanlage, die dieses Leistungsmerkmal bereitstellt, ist für jedes geheime Teilnehmergerät eine entsprechende Sperrinformation abgelegt. Diese wird beim Aufbau einer externen Verbindung - Teilnehmer befindet sich außerhalb der Kommunikationsanlage des rufenden Teilnehmers - gemeinsam mit der Rufnummer und dem Teilnehmernamen bis zur empfangenden Kommunikationsanlage übertragen und dort gespeichert. Bei internem Verbindungsaufbau ist die Sperrinforma tion ohnehin verfügbar und bewirkt - wie bei der externen Verbindung - daß an das gerufene Teilnehmergerät anstelle der Teilnehmerdaten eine sogenannte Leerinformation übergeben wird, die beim Verbindungspartner keine Displayanzeige zur Folge hat. Der Kommunikationsteilnehmer, der ein Teilnehmergerät mit dem Leistungsmerkmal Geheim-Rufnummer besitzt, erhält also einen permanenten Datenschutz. Durch diesen Datenschutz ist ein Abweisen des Anrufs aufgrund der Kenntnis der Teilnehmerdaten des rufenden Teilnehmers durch den gerufenen Teilnehmer nicht mehr möglich. Nicht mehr möglich ist aber auch, daß ein Anruf - aufgrund der Kenntnis der Teilnehmerdaten des rufenden Teilnehmers - bevorzugt vom gerufenen Teilnehmer entgegengenommen wird. So kann beispielsweise ein dringend erwarteter 'geheimer Anrufer' nicht mehr von - aus irgendwelchen Gründen - unerwünschten Gesprächspartnern unterschieden werden. Dadurch entstehen Probleme bezüglich der Akzeptanz der geheimen Teilnehmergeräte.

Diese Akzeptanzprobleme auszuräumen, ist die der Erfindung zugrundeliegede Aufgabe. Es soll dem Nutzer eines geheimen Teilnehmergerätes ermöglicht werden, bei jeder Verbindung neu zu entscheiden, ob er seine persönlichen Teilnehmerdaten preisgeben will oder nicht.

Diese Aufgabe wird in Verbindung mit dem eingangs definierten Verfahren durch die im kennzeichnenden Teil des Patentanspruchs 1 angegebenen Verfahrensschritte gelöst.

Die eingangs beschriebenen Funktionen des geheimen Teilnehmergerätes bleiben erhalten. Darüberhinaus wird die Möglichkeit geschaffen, beim Aufbau einer Verbindung - also zu einem beliebigen Zeitpunkt zwischen Abheben des Hörers (Gesprächsbeginn) und Auslösen der Verbindung - oder generell durch eine Geheimhaltungsaufhebeinformation eine identifikationsfunktion zu aktivieren. Dieses Aktivieren kann verbindungsbezogen Je nach Ausstattung der Kommunikationsanlage und der Teilnehmergeräte durch Drücken einer speziell dafür vorgesehenen Taste, durch Einwählen einer die Identifikationsfunktion kennzeichnenden Kennzahl oder durch Eingabe eines entsprechenden Sprachbefehls erfolgen. Generelles Aktivieren der Identifikationsfunktion bei jeder Verbindung erreicht man durch Eintragung der Geheimhaltungsaufhebeinformation an einem definierten, dem geheimen Teilnehmergerät zugeordneten Speicherplatz des zentralen Speichers der Kommunikationsanlage. Diese Eintragung wird von einer zentralen Stelle - beispielsweise einem sogenannten Betriebsterminal - aus vorgenommen. Die Identifikationsfunktion setzt einen durch sie bestimmten Programmablauf in der Steuerung der zum geheimen Teilnehmergerät gehörigen Kommunikationsanlage in Gang. Dieser Programmablauf ist derart ausgestaltet, daß er die Generierung einer Identifikationsinformation bewirkt. Diese Identifikationsinformation kann einige Bits oder Bytes umfassen und wird - beispielsweise im dynamischen Verbindungsspeicher der Kommunikationsanlage-den Teilnehmerdaten und der Sperrinformation zugeordnet. Diese Zuordnung findet sowohl in der Kommunikationsanlage des rufenden Teilnehmers, als auch in der Kommunikationsanlage des gerufenen Teilnehmers - wenn sich diese Anlagen nicht ohnehin aufgrund einer Internverbindung entsprechen - statt. Befindet sich der gerufene Teilnehmer in einer externen Kommunikationsanlage, so wird durch die Identifikationsfunktion auch die Übermittlung der Identifikationsinformation zu dieser Kommunikationsanlage bewirkt. Die Steuerung der Kommunikationsanlagen ist so ausgelegt, daß bei gleichzeitigem Vorhandensein der Identifikationsinformation und der Sperrinformation - bezüglich einer Verbindung - die Übertragung der Teilnehmerdaten zum Display des gerufenen Teilnehmergerätes erfolgt.

Mit diesem Verfahren der variablen Geheimhaltung von Teilnehmerdaten erhalten die über ein entsprechendes Teilnehmergerät verfügenden Kommunikationsteilnehmer die Möglichkeit, Jederzeit selbst zu entscheiden, ob und zu welchem Zeitpunkt sie ihre Identität preisgeben. Ihr Datenschutzbedürfnis kann zu jeder Zeit auf einfache Weise erfüllt werden. Meldet sich am Teilnehmergerät des gerufenen Teilnehmers nicht die gewünschte - dem Anrufer vertraute - Person, so bleibt der Anrufer trotz eines am Teilnehmergerät des gerufenen Teilnehmers vorhandenen Dis plays anonym. Andererseits kann sich der rufende Teilnehmer bei Entgegennahme des Anrufes durch die vertraute Person - gegenüber dieser - zusätzlich durch Freigabe der Übertragung der Teilnehmerdaten zum Teilnehmergerät der gerufenen Person identifizieren. Die Vorteile der ISDN-Technik bezüglich der Übermittlung von Teilnehmerdaten bleiben also erhalten und werden durch das Verfahren der variablen Geheimhaltung der Teilnehmerdaten noch vermehrt.

Im folgenden werden besondere Ausgestaltungen und Weiterbildungen der Erfindung beschrieben.

Ist im zentralen Speicher bezüglich eines geheimen Teilnehmergerätes eine Geheimhaltungsaufhebungsinformation eingetragen, so kann diese Eintragung durch Einwählen einer entsprechenden Kennzahl, durch Drücken einer speziellen Taste oder durch Sprachbefehl vom Teilnehmergerät aus unwirksam gemacht werden. Die Eintragung wird für die Dauer der aktuellen Verbindung gelöscht oder überschrieben. Nach Auslösen der Verbindung wird der vorhergehende Zustand automatisch durch entsprechende Programmabläufe wieder hergestellt. Für den Nutzer eines so betriebenen Teilnehmergerätes ergibt sich also die Möglichkeit, im Bedarfsfall seine Teilnehmerdaten geheimzuhalten. In allen anderen Fällen gelangen die Teilnehmerdaten bis zum Display des Verbindungspartners.

Durch einen Bedienvorgang, der dem beim Aktivieren der Identifikationsfunktion entspricht, wird die aktivierte Identifikationsfunktion deaktiviert. Es kann beispielsweise die gleiche Taste, die zum Aktivieren der Identifikationsfunktion gedrückt wurde, durch nochmaliges Drücken zum Deaktivieren der Identifikationsfunktion benutzt werden. Den gleichen Zweck kann aber auch eine spezielle Deaktivierungstaste erfüllen. Die Identifikationsfunktion ist so ausgestaltet, daß sie bei ihrer Deaktivierung eine Widerrufsinformation generiert. Diese Widerrufsinformation wird zu allen Speichern - auch zu an der Verbindung beteiligten externen Kommunikationsanlagen - übertragen, in de nen die Identifikationsinformation abgelegt ist. Die Widerrufsinformation macht - durch Löschen oder Überschreiben der Identifikationsinformation - die Sperrinformation wieder wirksam. Daraufhin erlischt die Anzeige der Teilnehmerdaten am Display des Teilnehmergerätes des gerufenen Teilnehmers. Dadurch kann beispielsweise eine irrtümliche Identifikation korrigiert werden.

Die Deaktivierung der Identifikationsfunktion erfolgt automatisch beim Auslösen der Kommunikationsverbindung. Dadurch ist sichergestellt, daß nach einer Aufhebung des Geheimstatus des geheimen Teilnehmergeräts bezüglich einer Verbindung, bei einer nachfolgenden Verbindung ein Grundzustand eingestellt ist, der dem Teilnehmergerät den Geheimstatus sichert.

In Kommunikationsanlagen, in denen ein Wechsel des Verbindungsziels - beispielsweise durch Anrufumleitung, Rufweiterschaltung - ohne Veranlassung durch den rufenden Teilnehmer möglich ist, wird durch die Kommunikationsanlagensteuerung, die den Verbindungszielwechsel ausführt, die Sperrinformation durch Überschreiben oder Löschen der Identifikationsinformation wieder wirksam gemacht. Damit ist sichergestellt, daß kein Unbefugter die geheimen Teilnehmerdaten erhält.

Umgekehrt kann durch den Wechsel des Verbindungsziels ein geheimes Teilnehmergerät erreicht werden. Die sonst übliche Übertragung der Teilnehmerdaten des gerufenen Teilnehmers an das Teilnehmergerät des rufenden Teilnehmers wird durch Zuordnen einer Sperrinformation zu den geheimen Teilnehmerdaten verhindert. Wie bei der Übertragung vom rufenden zum gerufenen Teilnehmergerät, wird eine Anzeige der geheimen Teilnehmerdaten in umgekehrter Richtung beim Teilnehmergerät des Verbindungspartners verhindert. Wünscht der geheime gerufene Teilnehmer die Anzeige seiner Teilnehmerdaten beim rufenden Teilnehmer, so erreicht er dies durch Aktivieren der Identifikationsfunktion von seinem Teilnehmergerät aus.

Teilnehmerdaten werden in modernen Kommunikationsanlagen nicht nur zur Anzeige beim Verbindungspartner verwendet. Häufig ver fügen die Kommunikationsanlagen über ein Datenmodul, in dem die ausgeführten Verbindungsaufträge teilnehmerspezifisch gespeichert werden. In diesen Modulen werden nicht nur der Zeitpunkt, die Dauer und die angefallenen Gebühren abgelegt, sondern auch Informationen darüber gespeichert, mit wem die Verbindung erfolgt ist (Teilnehmerdaten). Die gemeinsam mit den Teilnehmerdaten übertragene Sperrinformation verhindert nicht nur die Übertragung der Teilnehmerdaten zum Teilnehmergerät, sondern auch ihre Übertragung zum Datenmodul. Bei Unwirksammachung der Sperrinformation werden die Teilnehmerdaten nicht nur zum Teilnehmergerät des gerufenen Teilnehmers zur Anzeige auf dem Display übertragen, sondern auch zur Weiterverarbeitung an das Datenmodul übergeben.

Ist in einer Kommunikationsanlage die gleichzeitige Verbindung eines Teilnehmers mit mehreren Teilnehmern durch sogenannte Mehrfachverbindungen möglich, so aktiviert der geheime Teilnehmer getrennt für jeden einzelnen Verbindungspartner, dem er seine Teilnehmerdaten übertragen will, die Identifikationsfunktion. Damit ist gewährleistet, daß auch bei Mehrfachverbindungen nur die vom geheimen Teilnehmer bestimmten Verbindungspartner seine Teilnehmerdaten erhalten.

Um zu gewährleisten, daß der geheime Teilnehmer seine eventuell beabsichtigte Identifizierung beim Gesprächspartner nicht versäumt, wird ihm durch das Teilnehmergerät eine Aufforderung zur Identifizierung signalisiert. Dies kann über eine blinkende Identifizierungstaste oder durch einen entsprechenden Hinweis am Display erfolgen. Die aktivierte Identifikationsfunktion kann ebenso signalisiert werden; beispielsweise durch eine dauernd leuchtende Identifikationstaste oder ein entsprechendes Symbol in einem Bereich des Displays.

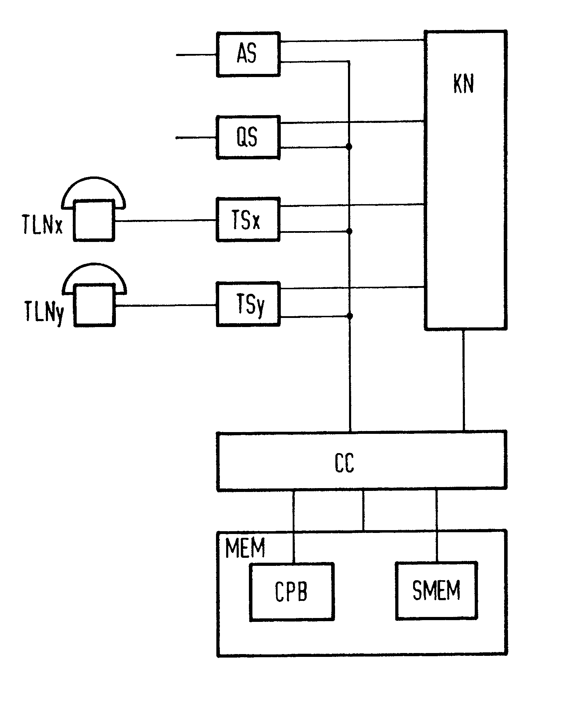

Nachfolgend wird im Rahmen einer in der Figur schematisch dargestellten Kommunikationsanlage ein Ausführungsbeispiel der Erfindung erläutert.

In der Figur ist schematisch eine Kommunikationsanlage dargestellt, die sich aus einer zentralen Steuerung CC, einem zentralen Speicher MEM, der unter anderem einen statischen Satzanschlußspeicher SMEM und einen dynamischen Verbindungsspeicher CPB umfaßt, einem Koppelnetz KN, mehreren Amtssätzen AS und Quersätzen QS zur Verbindung mit anderen Kommunikationsanlagen und mehreren Teilnehmersätzen TSx... TSy mit daran angeschlossenen Teilnehmergeräten TLNx... TLNy zusammensetzt.

Ein Teilnehmer meldet durch Abheben des Hörers seines geheimen Teilnehmergerätes TLNx der Kommunikationsanlage, daß er eine Gesprächsverbindung wünscht. Die zentrale Steuerung CC erhält diesen Wunsch über den dem geheimen Teilnehmergerät TLNx zugeordneten Teilnehmersatz TSx. Im statischen Satzanschlußspeicher SMEM ist neben den Teilnehmerdaten auch die Sperrinformation abgelegt, die besagt, daß das zu diesem Teilnehmersatz TSx gehörige Teilnehmergerät TLNx ein geheimes Teilnehmergerät ist. Die Teilnehmerdaten und die Sperrinformationen werden in dem dynamischen Verbindungsspeicher CPB transferiert. Der geheime Teilnehmer wählt nun die Rufnummer des Internteilnehmers, mit dem er in Verbindung treten will. Die Steuerung CC überprüft im Speicher MEM, ob das Teilnehmergerät TLNy des gewünschten Internteilnehmers frei ist. Ist dies der Fall, so erhält der geheime Teilnehmer über sein Teilnehmergerät TLNy einen Freiton und das gerufene Teilnehmergerät TLNy gibt einen Rufton ab. An das Teilnehmergerät TLNy des gerufenen Teilnehmers werden aufgrund der gemeinsam mit den Teilnehmerdaten im dynamischen Verbindungsspeicher CPB abgelegten Sperrinformation nicht die Teilnehmerdaten, sondern eine keine Anzeige am Display des gerufenen Teilnehmergerätes TLNy erzeugende Leerinformation übertragen. Vor oder nach dem Wählen der Zielrufnummer hat der geheime Teilnehmer die Möglichkeit, durch Drücken einer speziellen Taste am Teilnehmergerät TLNx in der zentralen Steuerung CC eine Identifikationsfunktion zu aktivieren. Diese Identifikationsfunktion bewirkt das Eintragen einer speziellen Identifikationsinformation in den dynamischen Verbindungsspeicher CPB, die dort den Teilnehmerdaten und der Sperrinformation zugeordnet wird.

Bei gleichzeitigem Vorliegen von Sperrinformation und Identifikationsinformation bezüglich dieser Verbindung veranlaßt die zentrale Steuerung CC die Übertragung der Teilnehmerdaten aus dem dynamischen Verbindungsspeicher CPB zum gerufenen Teilnehmergerät TLNy. Dort werden die Teilnehmerdaten auf dem Display angezeigt. Bei Auslösen der Verbindung werden die dieser Verbindung zugehörigen Daten im dynamischen Verbindungsspeicher CPB gelöscht. Damit wird auch die Identifikationsinformation gelöscht, wodurch der Geheimstatus des geheimen Teilnehmergerätes TLNx wiederhergestellt ist.

## Ansprüche

1. Verfahren zur Übertragung von Teilnehmerdaten, insbesondere des Namens und der Teilnehmeranschlußnummer eines Verbindungspartners, zwischen Teilnehmerendgeräten (TLN) einer Kommunikationsanlage, insbesondere einer Nebenstellenkommunikationsanlage, mit einer zentralen Steuerung (CC), einem zentralen Speicher (MEM) und mit an die Kommunikationsanlage angeschalteten, ein Display zu einer Anzeige der Teilnehmerdaten umfassenden Teilnehmergeräten (TLN), wobei von definierten rufenden geheimen Teilnehmergeräten (TLNx) gemeinsam mit den diesen Teilnehmergeräten (TLNx) zugehörigen Teilnehmerdaten eine die Anzeige dieser Daten am gerufenen Teilnehmergerät (TLNy) verhindernde Sperrinformation an eine empfangende Kommunikationsanlage übermittelt wird,

**dadurch gekennzeichnet,**

daß bei einem Aufbau einer von einem geheimen Teilnehmergerät (TLNx) ausgehenden Verbindung durch eine Geheimhaltungsaufhebeinformation eine programmtechnische Identifikationsfunktion in der Steuerung (CC) der zugehörigen Kommunikationsanlage aktiviert wird, daß diese Identifikationsfunktion das Generieren einer Identifikationsinformation bewirkt und daß diese Identifikationsinformation die im Zuge des Verbindungsaufbaus in einem Speicher (MEM) der empfangenden Kommunikationsanlage abgelegte Sperrinformation derart unwirksam macht, daß die Teilnehmerdaten des geheimen Teilnehmeranschlusses (TLNx) aus dem Speicher (MEM) der empfangenden Kommunikationsanlage ausgelesen und an dem Display des von dem geheimen Teilnehmergerät (TLNx) gerufenen Teilnehmergerätes (TLNy) der empfangenden Kommunikationsanlage angezeigt werden.

2. Verfahren nach Anspruch 1,

**dadurch gekennzeichnet,**

daß eine Übertragung der Geheimhaltungsaufhebeinformation zur Kommunikationsanlage durch Drücken einer speziellen Taste bzw. Kennzahleingabe am geheimen Teilnehmergerät (TLNx) ausgelöst bzw. vorgenommen wird.

3. Verfahren nach Anspruch 1

**, dadurch gekennzeichnet,**

daß die Geheimhaltungsaufhebeinformation verbindungsunabhängig im zentralen Speicher (CC) bezüglich des geheimen Teilnehmergerätes (TLNx) eingetragen ist.

4. Verfahren nach Anspruch 3,

**dadurch gekennzeichnet,**

daß die Geheimhaltungsaufhebeinformation bei einem Aufbau einer von einem Teilnehmergerät (TLNX) aus durch Tastendruck bzw. Kennzahleingabe für die Dauer einer Verbindung unwirksam gemacht wird.

5. Verfahren nach Anspruch 1,

**dadurch gekennzeichnet,**

daß ein Deaktivieren der Identifikationsfunktion durch einen Tastendruck bzw. eine Kennzahleingabe die Generierung einer Widerrufsinformation bewirkt, die die Sperrinformation wieder wirksam macht.

6. Verfahren nach Anspruch 5,

**dadurch gekennzeichnet,**

daß die Widerrufsinformation von der Kommunikationsanlage des rufenden Teilnehmers an eine Kommunikationsanlage des gerufenen Teilnehmers übertragen wird.

7. Verfahren nach Anspruch 1,

**dadurch gekennzeichnet,**

daß nach einem Auslösen einer Verbindung eine aktivierte Identifikationsfunktion von der Steuerung (CC) der Nebenstellenkommunikationsanlage automatisch deaktiviert wird.

8. Verfahren nach Anspruch 1, in einer Kommunikationsanlage, in der ein Wechsel eines Verbindungsziels ohne Veranlassung durch einen rufenden Teilnehmer möglich ist,

**dadurch gekennzeichnet,**

daß bei einem solchen Wechsel des Verbindungsziels die Sperrinformation von der Steuerung (CC) der betroffenen Kommunikationsanlage wieder wirksam gemacht wird.

9. Verfahren nach Anspruch 8,

**dadurch gekennzeichnet,**

daß ein geheimes Teilnehmergerät (TLNx) durch einen Wechsel des Verbindungsziels angewählt wird, daß dies die Generierung der Sperrinformation in der dem geheimen Teilnehmergerät (TLNx) zugehörigen Kommunikationsanlagensteuerung (GG) bewirkt, daß diese Sperrinformation gemeinsam mit den Teilnehmerdaten zur Kommunikationsanlage des rufenden Teilnehmers übertragen wird und daß diese Sperrinformation eine Anzeige der Teilnehmerdaten des gerufenen Teilnehmers am Display des rufenden Teilnehmergerätes (TLN) verhindert.

10. Verfahren nach Anspruch 9,

**dadurch gekennzeichnet,**

daß durch Aktivieren der Identifikationsfunktion am geheimen Teilnehmergerät (TLNx) und Generieren der Identifikationsinformation die Sperrinformation in der Kommunikationsanlage des rufenden Teilnehmers unwirksam gemacht wird.

11. Verfahren nach Anspruch 1, in einer Kommunikationsanlage, die über ein die Teilnehmerdaten bei Vorhandensein der Sperrinformation nicht erhaltendes Datenmodul zur Teilnehmerdatenhaltung und Teilnehmerdatenverarbeitung verfügt,

**dadurch gekennzeichnet,**

daß, nachdem die Sperrinformation durch die Aktivierung der Identifikationsfunktion unwirksam gemacht ist, eine Übertragung der Teilnehmerdaten zum Datenmodul erfolgt.

12. Verfahren nach einem der vorhergehenden Ansprüche in einer Kommunikationsanlage, die Mehrfachverbindungen zuläßt,

**dadurch gekennzeichnet,**

daß die Identifikationsfunktion für jeden Verbindungspartner getrennt aktiviert bzw. deaktiviert wird.

13. Verfahren nach einem der vorhergehenden Ansprüche,

**dadurch gekennzeichnet,**

daß am Teilnehmergerät (TLNx) eines geheimen Teilnehmeranschlusses eine Aufforderung zur Identifizierung signalisiert wird.

14. Verfahren nach einem der vorhergehenden Ansprüche,

**dadurch gekennzeichnet,**
daß am Teilnehmergerät (TLNx) eines geheimen Teilnehmeranschlusses die vorgenommene Aktivierung der Identifikationsfunktion angezeigt wird.